# EUROPÄISCHE PATENTSCHRIFT

(11) **EP 0 883 890 B1**
(45) Veröffentlichungstag und Bekanntmachung des Hinweises auf die Patenterteilung: **17.10.2001**
(21) Anmeldenummer: 97905090.3
(22) Anmeldetag: 26.02.1997
(51) Int. Cl.: H01J 9/00

(54) **VERFAHREN UND VORRICHTUNG ZUR KAPPENABTRENNUNG VON GASENTLADUNGSLAMPEN**
METHOD AND DEVICE FOR SEPARATING CAPS FROM GAS DISCHARGE LAMPS
PROCEDE ET DISPOSITIF DE SEPARATION DE CAPUCHONS DE TUBES A GAZ LUMINEUX

(30) Priorität: 28.02.1996 DE 19607482
(43) Veröffentlichungstag der Anmeldung: 16.12.1998
(73) Patentinhaber: Herborn, Paul, D-65388 Schlangenbad (DE)
(72) Erfinder: Herborn, Paul, D-65388 Schlangenbad (DE)
(74) Vertreter: Zwirner, Gottfried
(86) Internationale Anmeldenummer: EP9700918
(87) Internationale Veröffentlichungsnummer: WO9732332

(56) Entgegenhaltungen:
- EP-A- 0 157 249
- EP-A- 0 200 697

## Beschreibung

Die Erfindung bezieht sich auf ein Verfahren zur Abtrennung von Kappen von Gasentladungslampen nach dem Oberbegriff des Anspruchs 1 bzw. auf eine Vorrichtung zur Kappenabtrennung von Gasentladungslampen nach dem Oberbegriff des Anspruchs 7.

Bei einem bekannten Verfahren und Vorrichtung dieser Art (US 4 715 838) wird in die Lampenfassung der Kappe ein Loch mechanisch gebohrt, um das Innere der Gasentladungslampe zu belüften, dann erfolgt mechanisch das Anritzen in der Nähe der Kappenenden und anschließend werden die beiden Ritzlinien mit einfachem Gasflammen-Brenner erhitzt, um durch den Hitzeschock das Glas entlang der Ritzlinie abzusprengen. Eine derartige Vorgehensweise ist wirksam, aber zeitaufwendig.

Es ist auch bereits bekannt, eine Öffnung in das Entladungsgefäß mit Hilfe einer einfachen Gasflamme zu brennen, um das Entladungsgefäß zu belüften (DE 34 10 989A1; JP 52-94674 in: Patents Abstracts of Japan, sect. E 1977; Reimer, Burkard "Recyclinganlage und Verfahren zur Verwertung von quecksilberhaltigen Entladungslampen", in: Licht 3-4/1994, S. 296-302). Diese Vorgehensweise ist zeitaufwendig.

Ferner ist bekannt (DE 38 42 888A1), die Lampenenden mit einem Ringbrenner zu erhitzen und anschließend mit einem Trennkörper abzuschrecken, um die Lampenenden abzutrennen. Dies ist zeitaufwendig.

Diese bekannten Verfahren der Kappenabtrennung arbeiten somit zeitaufwendig, womit der Durchsacz an zu entsorgenden Gasentladungslampen entsprechend gering ist.

Der Erfindung liegt daher die Aufgabe zugrunde, eine Vorrichtung zur Kappenabtrennung von Gasentladungslampen derart weiterzuentwickeln, daß der Durchsatz von zu entsorgenden und wiederaufzubereitenden Gasentladungslampen erheblich gesteigert werden kann.

Dieses technische Problem löst die Erfindung mit den Merkmalen des Anspruchs 1. Dank des Einsatzes einer Abtrenneinrichtung, die mit Hilfe einer elektrisch erzeugbaren Plasma-Flamme an einer vorbestimmten Stelle ein Loch in den Glaskolben brennen kann, können etwa 5000 Gasentladungslampen pro Stunde belüftet werden. Mit anderen Worten können in einer Stunde die Kappen von etwa 5000 Gasentladungslampen abgetrennt werden.

Zweckmäßigerweise erfolgt die Erzeugung von Sollbruchstellen an dem Glaskolben zur Kappenabtrennung dadurch, daß der Glaskolben in der Nähe der Kappen erhitzt wird. Dazu weist die Heizeinrichtung zwei in Abstand voneinander parallel verlaufende Heizdrähte auf, über die die Gasentladungslampe unter Unterstützung einer Antriebseinrichtung rollen kann. Auf diese Weise wird die Gasentladungslampe an den Stellen umfangsseitig erhitzt und angeschmolzen, an denen anschließend die Kappen abgetrennt werden sollen. Anstelle der Heizdrähte können Heizdrahtschlaufen zum Einsatz kommen, in die der Glaskolben rollt oder mittels eines automatischen Mechanismus eingelegt oder eingehoben wird. Neben einer thermischen Erzeugung der Sollbruchstellen an dem Glaskolben ist es denkbar, ein hartes Werkzeug, wie z. B. ein Hartmetallrad, ein Ritzmeißel oder ähnliches, zu benutzen, um die Sollbruchstellen in der Nähe der Kappen in den Glaskoben zu ritzen.

Eine relativ kurze Zeit zum Einbrennen von Belüftungs-Löchern in den Glaskolben wird dadurch erreicht, daß eine Plasma-Flamme durch eine angelegte Hochfrequenzspannung zündbar ist. Die Hochfrequenzspannung wird an die Abtrenneinrichtung angelegt, die eine Düse und eine Gegenelektrode aufweist. Die Gegenelektrode ist vorteilhafterweise zylindrisch ausgebildet. Die zwischen der Gegenelektrode und der Düse angelegte Hochfrequenzspannung zündet die Plasma-Flamme bzw. den Lichtbogen . Die Gegenelektrode ist wenigstens teilweise innerhalb und in einem vorbestimmten axialen Abstand zur Düse angeordnet. Druckluft, die als Kühlmittel und plasmaerzeugendes Gas dient, strömt über die zylindrische Gegenelektrode und aus der Düse heraus. Auf diese Weise wird die Plasma-Flamme mittels Druckluft aus der Düse geblasen. Die Ausströmungsgeschwindigkeit der Druckluft durch die Düse ist so hoch, daß dadurch eine Saugwirkung hervorgerufen wird, die zusätzlich die Plasma-Flamme aus der Düse sozusagen herauszieht. Dadurch kann innerhalb kürzester Zeit eine extrem heiße, auf eine bestimmte Stelle des Glaskolbens fokussierbare Plasma-Flamme zum Brennen eines Lochs erzeugt werden. Die Abtrenneinrichtung ist vorteilhafterweise an der Vorrichtung derart angeordnet, daß die zu entsorgende Gasentladungslampe in einem vorbestimmten Abstand oberhalb der Düse vorbeiführbar ist. Vorzugsweise befindet sich die Düse etwa 3 mm unterhalb der vorbeizuführenden Gasentladungslampe. Natürlich ist es möglich, die Abtrenneinrichtung auch seitlich oder oberhalb der zu entsorgenden Gasentladungslampe anzuordnen. Zur Optimierung der Kappen-Abtrenngeschwindigkeit und damit des Durchsatzes zu entsorgender Gasentladungslampen erfolgt die Bestimmung des Einschaltzeitpunktes und die Dauer der Plasma-Flamme rechnergesteuert. Alternativ kann der Einschaltzeitpunkt der Plasma-Flamme durch einen Näherungsschalter oder durch einen mechanischen Schalter festgelegt sein.

Die Erfindung wird nachstehend anhand eines Ausführungsbeispiels in Verbindung mit den beiliegenden Zeichnungen näher erläutert. Es zeigen:
- Fig. 1: eine Längsschnitt-Ansicht einer eine Düse und eine Gegenelektrode aufweisenden Abtrenneinrichtung gemäß der Erfindung
- Fig. 2: eine vereinfachte, schematische Darstellung der Heizeinrichtung, und
- Fig. 3: eine vereinfachte, schematische Darstellung der erfindungsgemäßen Vorrichtung mit der Abtrenneinrichtung gemäß Fig. 1.

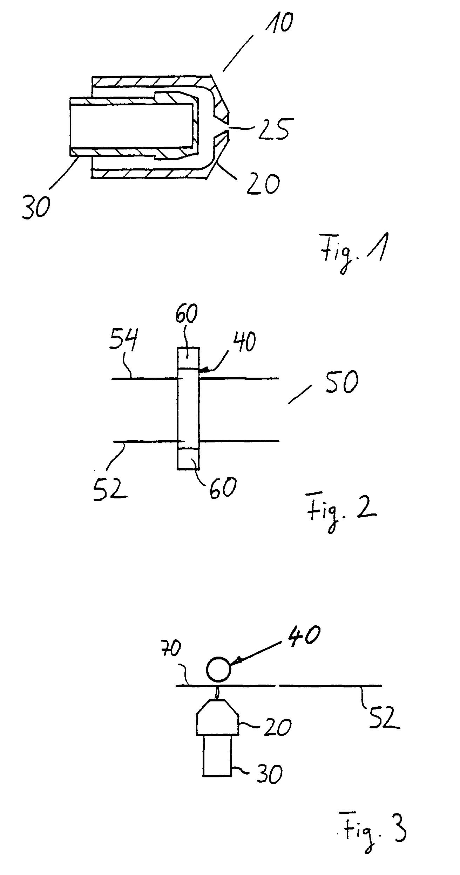

Fig. 1 zeigt im Längsschnitt eine Abtrenneinrichtung 10, die mit Hilfe einer elektrisch erzeugbaren Plasma-Flamme an einer vorbestimmten Stelle ein Loch in einen Glaskolben 40 brennen kann. Die Abtrenneinrichtung 10 umfaßt vorzugsweise eine Düse oder sogenannte Lochbrenn-Düse 20. Die Lochbrenn-Düse 20 dient unter anderem dazu, den Plasma-Lichtbogen bzw. die Plasma-Flamme einzuschnüren. Auf diese Weise kann die Plasma-Flamme auf einen kleinen Bereich des Glaskolbens 40 fokussiert werden. Dazu weist die Düse 20 einen einer Austrittsöffnung 25 abgewandten Bereich mit größtem Innendurchmesser auf. Der Innendurchmesser verläuft bis an die Stirnseite der Düse nahezu konstant. Der vordere Teil der Düse 20 verläuft entlang der Längsachse konusförmig und bildet schließlich die Austrittsöffnung 25. Eine Gegenelektrode 30 ist zylindrisch ausgebildet und weist an einem Ende eine Öffnung auf. Die Außenfläche des der Öffnung 25 der Gegenelektrode 30 abgewandten Seite verläuft in Längsrichtung konusförmig, um so die einströmende Druckluft in Richtung zur Austrittsöffnung 25 der Düse 20 leiten zu können. Die Abmessungen der Gegenelektrode sind derart gewählt, daß sie etwa koaxial zur Düse 20 angeordnet sein kann. Wie in Fig. 1 dargestellt ist, ist die Gegenelektrode 30 wenigstens teilweise innerhalb und in einem vorbestimmten axialen Abstand zur Düse 20 angeordnet. Zur Erzeugung der Plasma-Flamme oder des Plasma-Lichtbogens wird zwischen die Gegenelektrode 30 und die Düse 20 eine Hochfrequenzspannung angelegt, die als Zündspannung fungiert. Um die erzeugte Plasma-Flamme auf eine vorbestimmte Stelle des Glaskolbens 40 fokussieren zu können, wird Druckluft über die Gegenelektrode 30 bzw. zwischen die Gegenelektrode 30 und die Düse 20 geleitet, die danach aus der Austrittsörrnung 25 ausströmen kann. Die hohe Ausströmungsgeschwindigkeit der Druckluft verursacht im Inneren der Düse 20 eine Saugwirkung, so daß die Plasma-Flamme nicht nur aus der Düse 20 geblasen, sondern auch im Sog der Druckluft mit herausgezogen wird. Damit die seitlich den Glaskolben 40 abschließenden Kappen 60 an Sollbruchstellen abgetrennt werden können, ist eine in Fig. 2 dargestellte Heizeinrichtung 50 vorgesehen, die zwei im Abstand zueinander parallel verlaufende Heizdrähte 52, 54 aufweist. Die Heizdrähte sind vorzugsweise aus einer Nickel-Chrom-Legierung hergestellt. Der Drahtdurchmesser beträgt etwa 2 mm. Eine ausreichende Heiztemperatur wird erreicht, wenn die Heizdrähte 52, 54 im gelbglühenden Bereich betrieben werden, d.h. wenn etwa ein Strom von 50 A fließt. Es sei darauf hingewiesen, daß der Heizstrom natürlich einstellbar ist. Eine nicht dargestellte Antriebseinrichtung sorgt dafür, daß die Gasentladungslampe unter einem vorbestimmten Druck über die Heizdrähte 52, 54 rollt (s. Fig. 2). Auf diese Weise wird erreicht, daß der Glaskolben 40 an den beiden Sollbruchstellen umfangsseitig gleichmäßig erwärmt wird. In Förderrichtung der Gasentladungslampen gesehen ist hinter einem der Heizdrähte 52, 54 die erfindungsgemäße Abtrenneinrichtung 10 angebracht. Die Abtrenneinrichtung 10 ist seitlich und unterhalb eines angedeuteten Förderbandes 70 angeordnet. Vorteilhafterweise befindet sich die Lochbrenn-Düse 20 etwa 3 mm unterhalb einer zu bearbeitenden Gasentladungslampe. Dieser Sachverhalt ist in Fig. 3 dargestellt. Nachdem die Gasentladungslampe über die Heizdrähte 52, 54 gerollt ist, wird sie unmittelbar über der Lochbrenn-Düse 25 angehalten. Die Positionierung der Gasentladungslampe über der Abtrenneinrichtung 10 erfolgt rechnergestützt. Sobald die Gasentladungslampe oberhalb der Düse 25 positioniert ist, wird Hochfrequenzspannung an die Gegenelektrode 30 und die Düse 20 angelegt, die die Plasma-Flamme zündet. Über einen nicht dargestellten Kompressor wird Druckluft über die Gegenelektrode 30 zur Austrittsöffnung 25 der Düse 20 eingeströmt. Die Druckluft strömt durch die Austrittsöffnung 25 wieder aus und fokussiert in Verbindung mit der Düse 20 die Plasma-Flamme auf einen vorbestimmten Punkt auf dem Glaskolben 40. In einer sehr kurzen Zeit von etwa 200 ms brennt die Plasma-Flamme ein Loch in den Glaskolben 40. Aufgrund des Druckunterschiedes zwischen dem evakuierten Glaskolben 40 und dem atmosphärischen Druck wird der Glaskolben derart heftig belüftet, daß die Kappen an den Sollbruchstellen des Glaskolbens 40 abgetrennt werden. Die Wahl des optimalen Einschaltzeitpunktes sowie die Dauer der Plasma-Flamme, während der sie auf die Gasentladungslampe gerichtet ist, kann rechnergesteuert: erfolgen.

Dank der erfindungsgemäßen Vorrichtung ist es möglich, etwa 5000 Gasentladungslampen pro Stunde zu belüften.

## Patentansprüche

1. Verfahren zur Abtrennung von Kappen von Gasentladungslampen, die einen stabförmigen Glaskolben (40) und Kappen (60) an den Enden des stabförmigen Glaskolbens aufweisen, mit folgenden Schritten:
a) Zufuhr von Gasentladungslampen in einer Reihenfolge an eine Bearbeitungsstelle;
b) Belüften der Gasentladungslampen;
c) Erzeugen je einer Sollbruchstelle entlang des Umfangs der jeweils in der Bearbeitungsstelle befindlichen Gasentladungslampe nahe der Kappen;
d) Absprengen der Enden der Gasentladungslampen zusammen mit der jeweiligen Kappe;
**gekennzeichnet durch** folgende Maßnahmen:
die Belüftung und das Absprengen der Enden der Gasentladungslampen erfolgt in einem einzigen Arbeitsgang, indem eine Plasmaflamme einer Plasmadüse (10) zur jeweiligen Sollbruchstelle der Gasentladungslampen hin gerichtet und ein Loch in die jeweilige Gasentladungslampe gebrannt wird, wobei das ausströmende Gas der Plasmadüse **durch** das hergestellte Loch ins Innere der Gasentladungslampe strömt und der erzeugte Gasdruck mit behilflich ist, das betreffende Ende der Gasentladungslampe mit der Kappe abzusprengen.

2. Verfahren nach Anspruch 1, **dadurch gekennzeichnet, daß** die Sollbruchstellen durch Umfangsberührung der Enden der Gasentladungslampen an Heizdrähten (52,54) erzeugt werden.

3. Verfahren nach Anspruch 2, **dadurch gekennzeichnet, daß** die Zufuhr der Gasentladungslampen entlang von Heizdrähten (52,54) erfolgt, über welche die Gasentladungslampen nacheinander rollen.

4. Verfahren nach Anspruch 2, **dadurch gekennzeichnet, daß** die Umfangsberührung in Heizschlaufen der Heizdrähte erfolgt.

5. Verfahren nach Anspruch 1, **dadurch gekennzeichnet, daß** die Sollbruchstellen durch Ritzen der Gasentladungslampen entlang ihres Umfangs bei den Gasentladungsenden mittels eines Hartmaterials erfolgt.

6. Verfahren nach einem der Ansprüche 1 bis 5, **dadurch gekennzeichnet, daß** die Dauer der Wirksamkeit der Plasmaflamme über ein schaltbares Hochfrequenzfeld erfolgt.

7. Vorrichtung zur Abtrennung von Kappen von Gasentladungslampen, die einen stabförmigen Glaskolben (40) und Kappen (60) enthalten,
mit folgenden Merkmalen:
eine Zuführeinrichtung von Gasentladungslampen;
eine Einrichtung (50) zur Erzeugung von Sollbruchstellen an dem jeweiligen Glaskolben (40) der zugeführten Gasentladungslampen in der Nähe der Kappen (60);
eine Einrichtung zum Belüften der Glaskolben und
eine Einrichtung zum Abtrennen der Kappen (60),
**gekennzeichnet durch** folgende Merkmale:
die Belüftungseinrichtung und die Abtrenneinrichtung sind in Form einer Plasmadüse (10) mit einem äußeren Düsenkörper (20) und einer mit Hochfrequenzspannung beaufschlagbaren Gegenelektrode (30) miteinander vereinigt, wobei die Plasmadüse (10) in Förderrichtung der Gasentladungslampen hinter der Sollbrucherzeugungseinrichtung (50) angeordnet ist;
die Plasmadüse (10) mit ihrer elektrisch erzeugbaren Plasma-Flamme ist auf diese Sollbruchstelle des Glaskolbens (40) ausrichtbar, um darin ein Loch zu brennen und dabei ausströmendes Gas in das jeweilige Kolbenende zu lenken.

8. Vorrichtung nach Anspruch 7, **dadurch gekennzeichnet, daß** der Düsenkörper (20) und die Gegenelektrode (30) zylindrisch sowie mit konischen Bereichen ausgebildet sind, daß die Gegenelektrode (30) innerhalb des Düsenkörpers (20) angeordnet und mit einem steuerbaren Hochfrequenz-Spannungserzeuger verbunden ist.

9. Vorrichtung nach Anspruch 8, **dadurch gekennzeichnet, daß** eine Druckluftzufuhr zu einem Ringraum zwischen Düsenkörper (20) und Gegenelektrode (30) vorgesehen ist, um die Plasmaflamme nach Beendigung des Brennens des Loches in die jeweilige Gasentladungslampe auszublasen.

10. Vorrichtung nach einem der Ansprüche 7 bis 9, **gekennzeichnet durch** einen Computer zur Steuerung der Einschaltzeitpunkte und der Dauer des Brennens der Plasmaflamme.

## Claims

1. A process for removing caps from gas discharge lamps which have a bar-shaped glass tube (40) and caps (60) at the ends of the bar-shaped glass tube, including the steps of:
a) feeding gas discharge lamps in a succession to a processing station;
b) venting said gas discharge lamps;
c) producing a respective desired-rupture location along the periphery, near said caps, of one of said gas discharge lamps which is in the processing station ; and
d) blasting-off said ends of said gas discharge lamps together with its respective caps;
**characterised by** the steps of:
effecting said venting and blasting-off steps of said ends of said gas discharge lamps in a single step by a procedure whereby a plasma flame of a plasma nozzle (10) is directed towards said respective desired rupture location of said gas discharge lamps and by burning a hole into said respective gas discharge lamp, wherein the discharge flow of gas from said plasma nozzle flows through said hole produced in said gas discharge lamp into the interior thereof and the gas pressure so generated is also helpful in blasting off said relevant end of said gas discharge lamp with said cap.

2. The process as set forth in claim 1 wherein said step of producing desired-rupture locations is a step of peripherally contacting the ends of the gas discharge lamps against heating wires (52, 54).

3. The process as set forth in claim 2 wherein said step of feeding said gas discharge lamps is effected by feeding along heating wires (52, 54), over which the gas discharge lamps successively roll.

4. The process as set forth in claim 2 wherein said step of peripheral contacting is effected in heating loops of heating wires.

5. The process as set forth in claim 1 wherein said step of producing desired-rupture locations is a step of scratching said gas discharge lamps at the ends along the periphery thereof by means of a hard material.

6. The process as set forth in one of claims 1 through 5 wherein said plasma flame is controlled in its duration by way of a switchable high-frequency field.

7. An apparatus for removing caps from gas discharge lamps which include a bar-shaped glass tube (40) and caps (60), comprising:
means for feeding gas discharge lamps;
means (50) for producing desired-rupture locations in the proximity of said caps (60) on said respective glass tube (40) of said supplied gas discharge lamps;
means for venting said glass tubes, and
means for removing said caps (60),
**characterised in that**
said venting means and said removing means are combined together in the form of a plasma nozzle (10) having an outer nozzle body (20) and a counterpart electrode (30) which can be driven by high-frequency voltage, wherein said plasma nozzle (10) is arranged downstream of said means (50) for producing desired-rupture locations;
and **in that**
said plasma nozzle (10) together with its electrically generated plasma flame is alignable to said desired-rupture location of said glass tube (40) so as to burn a hole therein and to direct discharging gas into the respective glass tube end.

8. The apparatus as set forth in claim 7 wherein said nozzle body (20) and said counterpart electrode (30) are of a cylindrical configuration with conical regions, and in that the counterpart electrode (30) is arranged within the nozzle body (20) and is connected to a controllable high-frequency voltage generator.

9. The apparatus as set forth in claim 8 wherein means are provided for admitting compressed air to an annular space between the nozzle body (20) and the counterpart electrode (30) in order to blow out the plasma flame after termination of the operation of burning the hole into the respective gas discharge lamp.

10. The apparatus as set forth in one of claims 7 through 9 **characterised by** a computer for controlling the switch-on times and the duration of burning of the plasma flame.

## Revendications

1. Procédé pour la séparation de capuchons de tubes à gaz lumineux qui comportent une ampoule en forme de barre (40) et des capuchons (60) aux extrémités de l'ampoule en forme de barre, avec les étapes suivantes :
a) amenée ordonnée de tubes à gaz lumineux à un poste de travail ;
b) aération des tubes à gaz lumineux ;
c) production à chaque fois d'un point destiné à la rupture près des capuchons le long de la circonférence du tube à gaz lumineux se trouvant respectivement dans le poste de travail ;
d) séparation par explosion des extrémités des tubes à gaz lumineux en même temps que du capuchon respectif ;
**caractérisé par** les mesures suivantes :
l'aération et la séparation par explosion des extrémités des tubes à gaz lumineux s'effectuent en une seule opération du fait qu'on dirige une flamme à plasma d'une buse à plasma (10) vers le point respectif destiné à la rupture des tubes à gaz lumineux et qu'on brûle un trou dans le tube à gaz lumineux respectif, le gaz s'échappant de la buse à plasma passant alors à travers le trou fabriqué pour aller à l'intérieur du tube à gaz lumineux et la pression gazeuse produite aidant à la séparation par explosion de l'extrémité concernée du tube à gaz lumineux d'avec le capuchon.

2. Procédé selon la revendication 1, **caractérisé en ce qu'**on produit les points destinés à la rupture par contact circonférentiel des extrémités des tubes à gaz lumineux sur des fils chauffants (52, 54).

3. Procédé selon la revendication 2, **caractérisé en ce que** l'amenée des tubes à gaz lumineux s'effectue le long de fils chauffants (52, 54) au-dessus desquels les tubes à gaz lumineux roulent les uns après les autres.

4. Procédé selon la revendication 2, **caractérisé en ce que** le contact circonférentiel s'effectue dans des boucles chauffantes des fils chauffants.

5. Procédé selon la revendication 1, **caractérisé en ce que** la production des points destinés à la rupture s'effectue en entaillant au moyen d'un matériau dur les tubes à gaz lumineux le long de leur circonférence au niveau des extrémités des tubes à gaz lumineux.

6. Procédé selon l'une des revendications 1 à 5, **caractérisé en ce que** la détermination de la durée de l'efficacité de la flamme à plasma s'effectue par l'intermédiaire d'un champ haute fréquence commutable.

7. Dispositif pour la séparation de capuchons de tubes à gaz lumineux qui comportent une ampoule en forme de barre (40) et des capuchons (60),
avec les caractéristiques suivantes :
un dispositif d'amenée de tubes à gaz lumineux ;
un dispositif (50) pour la production de points destinés à la rupture près des capuchons (60) sur l'ampoule (40) respective des tubes à gaz lumineux amenés ;
un dispositif pour l'aération des ampoules ; et
un dispositif pour la séparation des capuchons (60) ;
**caractérisé par** les caractéristiques suivantes :
le dispositif d'aération et le dispositif de séparation sont réunis sous la forme d'une buse à plasma (10) avec un corps de buse extérieur (20) et avec une électrode complémentaire (30) pouvant être soumise à une tension haute fréquence, la buse à plasma (10) étant agencée, dans le sens de transport des tubes à gaz lumineux, derrière le dispositif (50) de production de points destinés à la rupture ;
la buse à plasma (10) avec sa flamme à plasma pouvant être produite de façon électrique peut être dirigée sur ce point destiné à la rupture de l'ampoule (40) pour brûler un trou à l'intérieur et pour diriger du gaz s'échappant alors dans l'extrémité de l'ampoule respective.

8. Dispositif selon la revendication 7, **caractérisé en ce que** le corps de buse (20) et l'électrode complémentaire (30) sont conçus cylindriques ainsi qu'avec des zones coniques, **en ce que** l'électrode complémentaire (30) est agencée à l'intérieur du corps de buse (20) et **en ce qu'**elle est reliée à un générateur de tension haute fréquence commandable.

9. Dispositif selon la revendication 8, **caractérisé en ce qu'**une amenée d'air comprimé à un espace annulaire entre le corps de buse (20) et l'électrode complémentaire (30) est prévue pour éteindre en la soufflant la flamme à plasma à la fin de la combustion du trou dans le tube à gaz lumineux respectif.

10. Dispositif selon l'une des revendications 7 à 9, **caractérisé par** un ordinateur pour la commande des instants d'enclenchement et de la durée de la combustion de la flamme à plasma.
